# FASCICULE DE BREVET EUROPEEN

(11) **EP 0 351 425 B1**
(45) Date de publication et mention de la délivrance du brevet: **24.03.1993**
(21) Numéro de dépôt: 88910053.3
(22) Date de dépôt: 09.11.1988
(51) Int. Cl.: G06F 15/20, G06F 1/16

(54) **SYSTEME INFORMATIQUE, EN PARTICULIER A USAGE DOMESTIQUE**
DATENVERARBEITUNGSSYSTEM, INSBESONDERE ZUR PRIVATEN BENUTZUNG
DATA PROCESSING SYSTEM, PARTICULARLY FOR DOMESTIC USE

(30) Priorité: 10.11.1987 FR 8715588
(43) Date de publication de la demande: 24.01.1990
(73) Titulaire: SYLLOGY S.A., F-75006 Paris (FR)
(72) Inventeur: PIONCHON, Philippe, F-75006 Paris (FR)
(74) Mandataire: Ramey, Daniel
(86) Numéro de dépôt international: FR8800552
(87) Numéro de publication internationale: WO8904522

(56) Documents cités:
- EP-A- 0 099 072
- EP-A- 0 207 492
- FR-A- 2 488 008
- FR-A- 2 586 119
- GB-A- 2 161 629

## Description

L'invention concerne un système informatique, en particulier à usage domestique, du type comprenant plusieurs ensembles d'écrans d'affichage et de claviers à nombre réduit de touches constituant des unités d'entrée-sortie utilisables simultanément par plusieurs personnes, ces unités d'entrée-sortie étant associées à un ensemble informatique comprenant au moins un microprocesseur, des mémoires et des moyens de connexion d'un élément à mémoire contenant des informations pré-enregistrées, que le microprocesseur permet d'afficher sur les écrans précités.

Cette structure est en effet classique pour les systèmes informatiques à usage éducatif dans lesquels une unité centrale comportant au moins un microprocesseur et des mémoires, est associée à plusieurs terminaux comportant chacun un écran d'affichage et un clavier à touches.

Le document FR-A-2 586 119 décrit un tel système utilisable notamment dans des salles de classe pour le traitement de textes par des élèves travaillant sur les terminaux.

Ces systèmes connus ont pour inconvénients d'être coûteux, encombrants et d'avoir des applications très spécifiques (les systèmes éducatifs ne peuvent être utilisés comme systèmes de jeux en commun et inversement). Il faut de plus en général qu'une personne (le professeur) commande le fonctionnement de l'unité centrale tandis que les élèves travaillent sur les terminaux.

L'invention a pour objet un système informatique qui ne présente pas ces inconvénients et qui puisse être utilisé par plusieurs personnes simultanément, soit pour participer à des jeux, soit à des fins éducatives, soit encore pour le traitement d'informations quelconques.

L'objet de l'invention est défini dans la revendication 1.

Le système selon l'invention peut être utilisé facilement par plusieurs personnes regroupées autour du plateau, pour le traitement des informations enregistrées dans l'élément à mémoire. De plus, la connexion amovible d'un second système informatique comprenant un ou plusieurs logiciels spécialisés, permet d'améliorer de façon très importante les performances du système et d'utiliser toute une bibliothèque de logiciels spécialisés.

Selon une autre caractéristique de l'invention, l'ensemble informatique logé dans le plateau comprend des moyens de connexion à des unités d'affichage du type imprimante et/ou écran de télévision.

Selon encore une autre caractéristique de l'invention, le système comprend également des moyens de connexion à un réseau téléphonique.

Un tel système est donc apte à rendre les mêmes services qu'un système informatique de type professionnel.

Avantageusement, les claviers précités sont équipés de moyens de lecture ou d'identification optique de documents.

L'utilisation de ces moyens de lecture optique facilite beaucoup l'utilisation du système et accélère de façon importante la saisie d'informations standard.

Avantageusement, l'élément à mémoire contenant des informations préenregistrées peut être une carte à mémoire, en particulier du type carte de crédit, qui est équipée également d'un microprocesseur.

D'autres caractéristiques, détails et avantages de l'invention apparaîtront plus clairement à la lecture de la description explicative qui va suivre, faite à titre d'exemple en référence aux dessins annexés, dans lesquels :
- la figure 1 représente schématiquement le plateau et le boîtier de commande d'un système informatique selon l'invention ;
- la figure 2 représente schématiquement la structure du système complet.

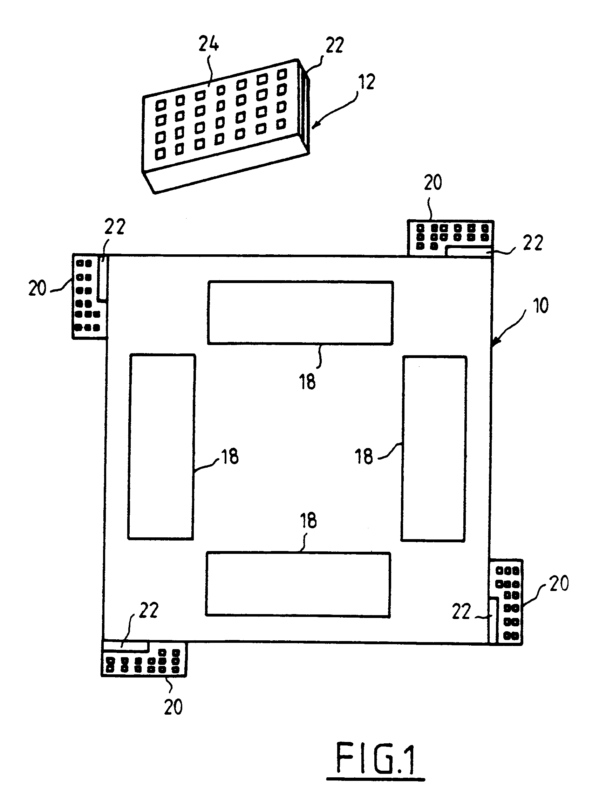

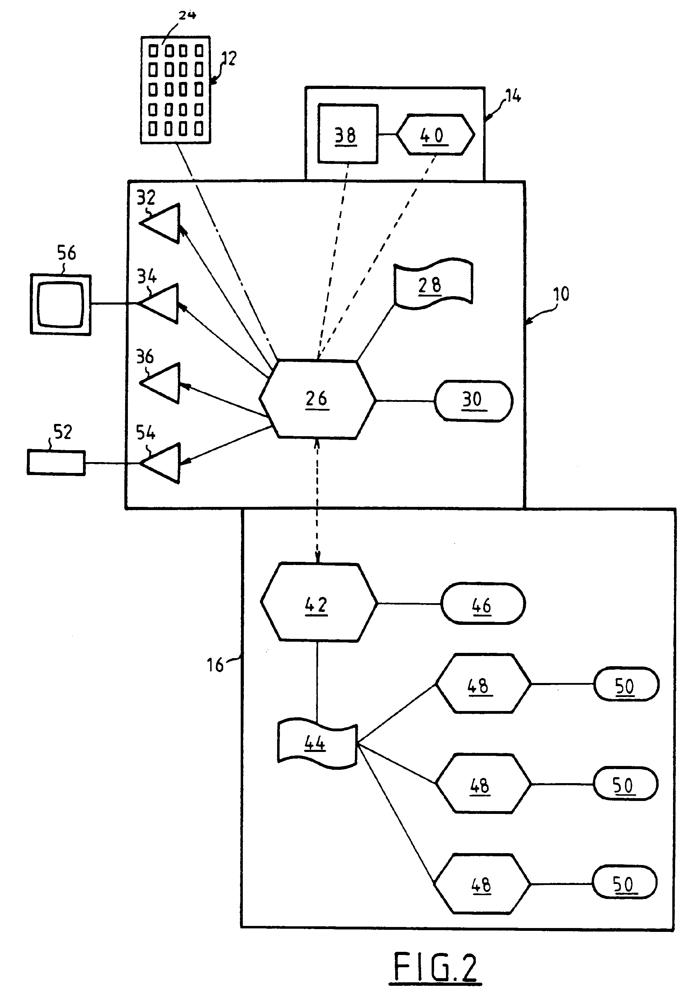

Dans le mode de réalisation représenté à titre d'exemple dans les dessins, le système selon l'invention comprend essentiellement un plateau 10, un boîtier de commande 12, (figure 1), des moyens de réception ou de connexion d'un élément 14 à mémoire contenant des informations préenregistrées, et des moyens de connexion d'un bloc ou module 16, équipé de microprocesseurs et de mémoires pour le traitement de l'information au moyen de logiciels spécialisés (figure 2).

Le plateau 10 est lui-même équipé d'écrans d'affichage 18, qui sont par exemple au nombre de quatre et placés le long des côtés du plateau 10 de forme carrée. Chaque écran d'affichage 18 est associé fonctionnellement à un petit clavier 20, comportant un nombre de touches réduit, par exemple de l'ordre de quinze à vingt, et à un moyen 22 de lecture optique de documents standard, ces moyens 22 pouvant être associés aux claviers 20 comme représenté en figure 1.

On peut prévoir, si on le désire, que les petits claviers 20, comportant ou non les moyens de lecture optique 22, sont connectés de façon amovible au système informatique contenu dans le plateau 10.

Le boîtier de commande 12 comprend, sur l'une de ses faces, un clavier 24 comportant un nombre de touches beaucoup plus important que celui des petits claviers 20, et par exemple de cinquante, soixante ou quatre-vingt touches environ. Le boîtier 12 est également équipé d'un moyen 22 de lecture optique de documents, identique à ceux des petits claviers 20. De préférence, le boîtier 12 est relié au système informatique du plateau 10 par liaison à infrarouge ou à ultrasons, au moyen d'émetteurs montés dans le boîtier 12 et de récepteurs dans le plateau 10.

On se réfère maintenant à la figure 2 qui représente schématiquement la structure d'un système complet.

Le système informatique logé dans le plateau 10 comprend un microprocesseur 26 associé à une mémoire programme 28, à une mémoire de travail 30 et à des circuits 32 de réception des informations fournies par les moyens de lecture 22, 34 de commande des écrans d'affichage 18, et 36 de commande d'un haut parleur produisant des signaux sonores de tonalités différentes, ou de commande de moyens analogues de signalisation. L'élément 14 associable au plateau 10 peut se présenter sous la forme d'une carte à mémoire, par exemple du type carte de crédit, et comprend alors une mémoire 38 associée à un microprocesseur 40.

Le second système informatique 16 comprend un microprocesseur 42 associé à une mémoire programme 44 et une mémoire de travail 46. Il peut également comprendre un ou plusieurs microprocesseurs 48 associés chacun à une mémoire programme et une mémoire de travail 50 en étant reliés en parallèle au microprocesseur 42 et à sa mémoire programme 44, de façon à pouvoir exécuter simultanément des tâches indépendantes sous commande du microprocesseur 42. Ce dernier est alors dans ce cas un microprocesseur maître, tandis que les microprocesseurs 48 sont des microprocesseurs esclaves selon la terminologie usuelle.

Le système selon l'invention peut être utilisé, soit en associant la carte à mémoire 14 au plateau 10, soit en associant le second système informatique 16 au plateau 10, soit encore en associant la carte à mémoire 14 et le second système informatique 16 au plateau 10.

Le microprocesseur 26 a essentiellement pour fonction de gérer les unités d'entrée-sortie constituées par les écrans d'affichage 18, les claviers 20, 24 et les moyens 22 de lecture optique. Ces moyens d'entrée-sortie peuvent encore comprendre une imprimante 52, associée au microprocesseur 26 par un circuit de commande 54, et/ou un écran 56 de grande dimension, par exemple l'écran d'un poste de télévision.

Lorsqu'une carte à mémoire 14 est associée au plateau 10, le microprocesseur 26 de ce plateau permet l'affichage sur l'un des écrans 18 ou sur l'écran 56 de grande dimension, des informations enregistrées dans la memoire 38 de la carte 14, au moyen d'un logiciel qui est contenu dans la mémoire 28 du microprocesseur 26, ou dans la mémoire 44 du microprocesseur 42 du second système 16. Les informations de la mémoire 38 peuvent être imprimées par l'imprimante 52 sous commande du microprocesseur 26. Lorsque la carte à memoire 14 est une carte de crédit ou carte bancaire, le code secret associé à cette carte peut être saisi au moyen du clavier 24 du boîtier 12 pour permettre l'accès aux informations de la mémoire 38. La carte à mémoire 14 peut être par ailleurs une carte de jeu, dont la mémoire 38 contient un grand nombre de questions enregistrées avec leurs réponses. Chaque question peut être constituée de la question proprement dite, de trois réponses possibles numérotées de 1 à 3, et d'un commentaire de quelques lignes expliquant la bonne réponse. Ces questions peuvent porter sur un même thème, ou sur des thèmes différents.

Le second système informatique 16 permet de faire fonctionner le système selon l'invention comme un micro ordinateur de type professionnel et d'exécuter très rapidement des calculs complexes. De plus, les logiciels qui peuvent être enregistrés dans les mémoires du second système informatique sont particulièrement bien protégés, puisqu'ils résident à demeure dans ce second système et n'ont pas à être copiés dans la mémoire du système informatique du plateau 10.

Le système selon l'invention est beaucoup plus simple à utiliser qu'un micro ordinateur de type classique, grâce à la présence des écrans individuels, 18, des moyens 22 de lecture optique de documents standards, et des petits claviers individuels 20 ayant un nombre réduit de touches, qui sont en fait des touches de fonction dont la signification est affichée. pour chaque logiciel utilisé, sur les écrans 18.

Le clavier 24 du boîtier 12 sert à la saisie d'informations plus complexes.

Le système présente également l'avantage de pouvoir être utilisé commodément par plusieurs personnes simultanément dans certaines applications.

De plus et de façon classique, le système informatique du plateau 10 peut comprendre un circuit de liaison au réseau téléphonique.

## Revendications

1. Système informatique, en particulier à usage domestique, comprenant plusieurs ensembles d'écrans d'affichage (18) et de claviers (20) à nombre réduit de touches constituant des unités d'entrée-sortie utilisables simultanément par plusieurs personnes, ces unités d'entrée-sortie étant associées à un ensemble informatique comprenant au moins un microprocesseur (26), des mémoires (28,30) et des moyens de connexion à un élément (14) à mémoire (38) contenant des informations pré-enregistrées que le microprocesseur (26) permet d'afficher sur les écrans (18), caractérisé en ce que ledit ensemble informatique est logé dans un plateau (10) qui est équipé desdites unités d'entrée-sortie (18,20) et qui est associé à un clavier de commande (24), ledit clavier de commande comportant un nombre de touches plus important que celui des claviers (20) précités et servant à la saisie d'informations plus complexes, le microprocesseur (26) de cet ensemble ayant essentiellement pour fonction de gérer ces unités d'entrée-sortie, le système comprenant également des moyens de connexion à un second système informatique qui comprend au moins un microprocesseur (42) et des mémoires (44, 46) dans lesquelles sont enregistrés un ou plusieurs logiciels spécialisés exécutables sous commande du microprocesseur (42) de ce second système informatique.

2. Système selon la revendication 1, caractérisé en ce que l'ensemble informatique logé dans le plateau (10) comprend également des moyens de connexion à des unités d'affichage du type imprimante (52) et/ou écran (56) de télévision.

3. Système selon la revendication 1 ou 2, caractérisé en ce que l'ensemble informatique logé dans le plateau (10) comprend des moyens de connexion à un réseau téléphonique.

4. Système selon l'une des revendications précédentes, caractérisé en ce que les claviers (20, 24) précités sont équipés de moyens (22) de lecture ou d'identification optique de documents.

5. Système selon l'une des revendications précédentes, caractérisé en ce que l'élément à mémoire (14) est constitué par une carte à mémoire, en particulier du type carte de crédit.

6. Système selon la revendication 5, caractérisé en ce que la carte à mémoire comprend également un microprocesseur (40).

7. Système selon l'une des revendications précédentes, caractérisé en ce que le clavier de commande (24) est relié au microprocesseur (26) de l'ensemble logé dans le plateau (10) par des liaisons à infrarouge ou ultra-son.

8. Système selon l'une des revendications précédentes, caractérisé en ce que le second système informatique comprend un microprocesseur maître (42) et plusieurs microprocesseurs esclaves (48) associés à des mémoires programmes et à des mémoires de travail (50) pour exécuter simultanément des tâches indépendantes sous commande du microprocesseur maître (42).

## Patentansprüche

1. Informationssystem, insbesondere zum privaten Gebrauch, das mehrere Einheiten mit Anzeigeschirmen (18) und Tastaturen (20) mit verringerter Tastenanzahl aufeist, welche Ein/Ausgabeeinheiten bilden, die gleichzeitig von mehreren Personen benützt werden können, wobei diese Ein/Ausgabeeinheiten einer Informationseinheit zugeordnet sind, die zumindest einen Mikroprozessor (26), Speicher (28, 30) und Mittel zum Anschließen an ein Element (14) mit einem Speicher (38) aufweist, welcher voreingetragene Informationen enthält, deren Anzeige an den Schirmen (18) durch den Mikroprozessor (26) ermöglicht wird, **dadurch gekennzeichnet, daß** die Informationseinheit sich auf einer Platte (10) befindet, die mit den Ein/Ausgabeeinheiten (18, 20) versehen ist, und die einer Steuertastatur (24) zugeordnet ist, wobei die Steuertastatur eine Anzahl von Tasten mit höherer Wertigkeit als die Tasten der Tastaturen (20) aufweist und zum Erfassen komplexerer Informationen dient, wobei der Mikroprozessor (26) dieser Einheit die Aufgabe besitzt, diese Ein/Ausgabeeinheiten zu verwalten, und das Informationssystem ebenso Mittel zum Anschließen an ein zweites Informationssystem aufweist, das zumindest einen Mikroprozessor (42) und Speicher (44, 46) enthält, in welchen eine spezielle Software enthalten ist, welche durch Befehle des Mikroprozessors (42) des zweiten Informationssystems ausgeführt werden kann.

2. System nach Anspruch 1, **dadurch gekennzeichnet, daß** die sich auf der Platte (10) befindliche Informationseinheit auch Mittel zum Anschließen von Anzeigeeinheiten in Form von Druckern (52) und/oder Fernsehschirmen (56) aufweist.

3. System nach den Ansprüchen 1 oder 2, **dadurch gekennzeichnet, daß** die sich auf der Platte (10) befindliche Informationseinheit Mittel zum Anschließen an ein Telefonnetz aufweist.

4. System nach einem der vorigen Ansprüche, **dadurch gekennzeichnet, daß** die Tastaturen (20, 24) mit Mitteln (22) zum Lesen oder zur optischen Identifikation von Dokumenten versehen sind.

5. System nach einem der vorigen Ansprüche, **dadurch gekennzeichnet, daß** das Speicherelement (14) aus einer Speicherkarte, insbesondere vom Typ einer Kreditkarte gebildet wird.

6. System nach Anspruch 5, **dadurch gekennzeichnet, daß** die Speicherkarte auch einen Mikroprozessor (40) enthält.

7. System nach einem der vorigen Ansprüche, **dadurch gekennzeichnet, daß** die Steuertastatur (24) über Infrarotstrahlung oder Ultraschall mit dem Mikroprozessor (26) der sich auf der Platte (10) befindlichen Einheit verbunden ist.

8. System nach einem der vorigen Ansprüche, **dadurch gekennzeichnet, daß** das zweite Informationssystem einen Hauptmikroprozessor (42) und mehrere Untermikroprozessoren (48) aufweist, die den Programmspeichern und den Arbeitsspeichern (50) zugeordnet sind, um unter Steuerung durch den Hauptmikroprozessor (42) gleichzeitig unabhängige Aufgaben zu erfüllen.

## Claims

1. A computer system, in particular for home use, comprising several assemblies of display screens (18) and of keyboards (20) having a small number of keys, said assemblies constituting input-output units simultaneously usable by several people, said input-output units being associated with a computer assembly comprising at least one microprocessor (26), memories (28,30) and means for connection to an element (14) having a memory (38) containing prerecorded information which can be displayed by the microprocessor (26) on the screens (18), the system being characterized in that the said computer assembly is housed in a board (10) which is equipped with the said input-output units (18,20) and which is associated with a control keyboard (24), said control keyboard comprising a larger number of keys than the said keyboards (20) and being usable for inputting more complex information, the microprocessor (26) of this assembly having essentially the function to control the said input-output units, the system comprising also means for connection to a second computer system which comprises at least one microprocessor (42) and memories (44,46) in which are stored one or more specialized programs which can be executed under control of the microprocessor (42) of this second computer system.

2. A system according to claim 1, characterized in that the computer assembly housed in the board (10) also includes means for connection to display units of the printer type (52) and/or the television screen (56) type.

3. A system according to claim 1 or 2, characterized in that the computer assembly housed in the board (10) includes means for connection to a telephone network.

4. A system according to any preceding claim, characterized in that said keyboards (20,24) are fitted with means (22) for optically reading or identifying documents.

5. A system according to any preceding claim, characterized in that the memory element (14) is constituted by a memory card, in particular of the credit card type.

6. A system according to claim 5, characterized in that the memory card also includes a microprocessor (40).

7. A system according to any preceding claim, characterized in that the control keyboard (24) is connected to the microprocessor (26) of the assembly housed in the board (10) via an infrared or ultrasonic link.

8. A system according to any preceding claim, characterized in that the second computer system includes a master microprocessor (42) and a plurality of slave microprocessors (48) associated with respective program memories and working memories (50) for executing independent tasks simultaneously under the control of the master microprocessor (42).
